# NEUE EUROPÄISCHE PATENTSCHRIFT

(11) **EP 0 236 802 B2**
(45) Veröffentlichungstag und Bekanntmachung des Hinweises auf die Entscheidung über den Einspruch: **19.11.1997**
(45) Hinweis auf die Patenterteilung: 04.07.1990
(21) Anmeldenummer: 87102235.6
(22) Anmeldetag: 17.02.1987
(51) Int. Cl.: C21B 13/14, C21B 13/00

(54) **Verfahren zur Schmelzreduktion von Eisenerzen**
Iron ore melt reduction process
Procédé pour la réduction à l'état liquide de fer

(30) Priorität: 08.03.1986 DE 3607775
(43) Veröffentlichungstag der Anmeldung: 16.09.1987
(73) Patentinhaber: KLÖCKNER CRA PATENT GMBH, 47057 Duisburg (DE)
(72) Erfinder: Brotzmann, Karl, Prof. Dr. Dr., D-8458 Sulzbach-Rosenberg (DE); Turner, Richard Edwin, Dr., verstorben (DE); Fassbinder, Hans-Georg, Dr. rer. nat., D-8458 Sulzbach-Rosenberg (DE)
(74) Vertreter: Kador & Partner

(56) Entgegenhaltungen:
- EP-A- 0 036 382
- EP-B- 0 094 707
- DE-A- 2 629 743
- DE-A- 3 133 575
- DE-A- 3 418 085
- DE-C- 2 843 303
- DE-C- 3 318 005
- FR-A- 1 003 304
- FR-A- 1 314 435
- GB-A- 1 213 641
- US-A- 3 028 231
- US-A- 3 186 830
- US-A- 3 264 096
- US-A- 3 462 263
- US-A- 3 734 716
- Article: "Developments in steelmaking", "The metallurgist & Materials Technologist", April 1984, pages 197 - 203
- "New technologies for efficient utilization of coal in the iron an d steel industry", Proceedings 13th CMMI Conference, Singapore, 1986, pages 87-92
- "New process developments in melting scrap and sponge iron", Iron and Steel Engineer, February 1982, pages 36-42
- Iron proceedings 1968, "Smelting Reduction", Sven Eketorp, pages 36-39

## Beschreibung

Die Erfindung betrifft ein Verfahren zur Schmelzreduktion von Eisenerzen, bei dem das Eisenoxid im wesentlichen im flüssigen Zustand reduziert wird und die erforderliche Energie zum Ausgleich der Wärmebilanz des Prozesses durch die Zugabe kohlenstoffenthaltender Brennstoffe an die Schmelze und durch die Nachverbrennung der entstehenden Reaktionsgase, hauptsächlich CO und H₂, erzeugt wird.

Es sind bereits eine Reihe von Verfahren bekannt, bei denen vorreduziertes Erz zusammen mit Kohle eingeschmolzen und das dabei entstehende Gas für die Reduktion von Eisenerz genutzt wird.

Der Prozeß gemäß der deutschen Offenlegungsschrift 31 33 575 verbessert des Wärmeangebot im Einschmelzgefäß dadurch, daß Reaktionsgase aus der Eisenschmelze durch auf die Badoberfläche geblasenen Sauerstoff im Raum oberhalb der Schmelze angesaugt, zur Badoberfläche mitgerissen, teilweise verbrannt und die entstehende Wärme an die Eisenschmelze übertragen wird. Bei diesem bekannten Verfahren erzeugt man flüssiges Eisen durch die Erzzugabe in den Eisenbadreaktor. Das gleichzeitig gebildete Kohlegas läßt sich zur Vorreduktion von Erz nutzen. Der Brennstoffverbrauch bei diesem Verfahren ist allerdings relativ hoch.

Mit dem gleichen Nachteil ist auch der Prozeß gemäß der deutschen Patentschrift 28 43 303 behaftet. Bei diesem Verfahren wird stückige Kohle in ein Wirbeibeit, das sich auf dem Eisenbad befindet, gegeben, und die Gase dienen zur Vorreduktion von Eisenerz. Um 1 t flüssiges Eisen aus dem in der Gasphase auf einen hohen Metallisierungsgrad vorreduzierten Erz zu erzeugen, benötigt man ca. 900 kg einer hochwertigen Kohle. Dieses Verfahren produziert aber einen beträchtlichen Gasüberschuß, dessen Verwertbarkeit im wesentlichen die Wirtschaftlichkeit des Prozesses bestimmt.

Die deutsche Offenlegungsschrift 34 18 085 beschreibt ein Verfahren zur Eisenherstellung aus Erz, bei dem man in einem Erzreduktionsgefäß mit den Reaktionsgasen aus dem Einschmelzgefäß das Erz auf einen Metallisierungsgrad von ca. 50% reduziert. Bei diesem Prozeß werden die aus der Eisenschmelze austretenden Reaktionsgase im Einschmelzgefäß zu 30 bis 40% nachverbrannt, und die entstehnende Wärme wird dabei weitgehend an die Schmelze übertragen. Die Reaktionsgase werden dann, auf dem Weg vom Einschmelzaggregat zum Erzreduktionsgefäß, durch Zugabe von Reduktionsmitteln, wie z.B. Erdgas oder staubförmige Kohle, reduziert und gleichzeitig abgekühlt.

Ein anderes, bekanntes Verfahren verwendet weitgehend vorreduziertes Eisenerz mit einem Metallisierungsgrad von 92 bis 94%, das zusammen mit kohlenstoffhaltigen, festen Energieträgern und Sauerstoff im Einschmelzgefäß aufgeschmolzen wird. Das entstehende Gas dient zur Vorreduktion der Erze und, um es dabei besser auszunutzen, führt man es im Kreislauf und entfernt die CO₂-Anteile.

Bei den beiden letztgenannten Verfahren kombiniert man somit drei Schritte, um zu einem möglichst niedrigen Brennstoffverbrauch zu gelangen, nämlich einerseits die Schmelzreduktion mit Nachverbrennung, Heißgasreduktion der Abgase aus dem Einschmelzgefäß und Vorreduktion der Erze in der Gasphase oder andererseits Einschmelzen mit Kohle und Sauerstoff ohne Nachverbrennung, Ausnutzung der Gase zur Vorreduktion und Entfernen des CO₂ bei der Gasrückführung. Diese Prozesse benötigen ca. 600 kg Kohle, um 1 t Eisen aus Eisenerz herzustellen.

Die Aufgabe der vorliegenden Erfindung besteht darin, ein Verfahren zu schaffen, das mit einem geringeren Anteil von Fremdenergie, z.B. kohlenstoffenthaltende Brennstoffe, auskommt.

Das erfindungsgemäße Verfahren löst diese Aufgabe dadurch, daß die Reaktionsgase nacheinander zweimal oder häufiger in Gasstrahlen vorgewärmter Luft, die in Reaktionsräume blasen, die wirkungsmäßig unabhängig voneinander sind, nachverbrannt werden und daß die durch die zumindest zweistufige Nachverbrennung erzeugte Wärme an die Schmelze rückübertragen wird.

Gemäß der Erfindung werden die Reaktionsgase mindestens ein zweites Mal nachverbrannt, indem man die Gase nach der ersten Nachverbrennungsstufe wieder in ein sauerstoffenthaltendes Verbrennungsgas einsaugt, und die dabei entstehende Energie wird zu ihrem wesentlichen Anteil bei der Schmelzreduktion genutzt, beispielsweise zum Schmelzen der eingeleiteten, gemahlenen Erze, wobei auch eine Vorreduktion des Eisenerzes bis zur Wüstit-Stufe erfolgen kann.

Eine vorteilhafte Ausführungsform der vorliegenden Erfindung besteht darin, daß an der Auftreffstelle des zweiten Nachverbrennungsgasstrahles weniger reduzierende Bedingungen vorliegen als an der Auftreffstelle des ersten Nachverbrennungsgasstrahles. Um einen hohen Nachverbrennungsgrad in der zweiten Stufe zu erreichen, sollte das Reduktionspotiential hier niedriger sein im Vergleich zur Auftreffstelle des ersten Nachverbrennungsgasstrahles, da die Gasstrahlen im allgemeinen einen hohen Oxidationsgrad aufweisen und wahrscheinlich mit der flüssigen Phase im Einschmelzgefäß reagieren.

Gemäß der Erfindung können die Reaktionsräume, in denen die Gasstrahlen wirken, aus zwei getrennten, jedoch unmittelbar aneinander gekoppelte, Gefäßen bestehen. Beispielsweise kann das erste Reaktionsgefäß ein Trommelkonverter sein, der mit dem zweiten Reaktionsgefäß, beispielsweise einem Schmelzzyklon, verbunden ist. Überraschenderweise hat es sich jedoch gezeigt, daß auch in einem einzigen Gefäß sich die Reaktionsräume der Nachverbrennungsgasstrahlen so gebrennt halten lassen, daß eine zweistufige Nachverbrennung der Reaktionsgase möglich ist. Die Reaktionsgase nacheinander zweimal oder häufiger in Gasstrahlen, die in Reaktionsräume blasen, die wirkungsmäßig unabhängig voneinander sind, nachzuverbrennen, ist ein wesentliches Merkmal der vorliegenden Erfindung.

Gemäß der Erfindung wirkt sich die Einhaltung der folgenden Maßnahmen beim Betrieb des Einschmelzreaktors unterstützend auf die betriebssichere Einstellung der zweistufigen Nachverbrennung im gleichen Gefäß und die Erzielung eines hohen Gesamtnachverbrennungsgrades, sowie der sicheren Rückübertragung der erzeugten Wärme an die Schmelze, aus. Die Badbewegung an der Auftreffstelle des ersten Nachverbrennungsgasstrahles, also dem Bereich mit hohem Reduktionspotential, ist durch die Menge und Art der eingeleiteten Reaktionspartner oder Spülgase deutlich größer einzustellen als an der Auftreffstelle des zweiten oder weiterer Nachverbrennungsgasstrahlen. Der erste Nachverbrennungsgasstrahl trifft die Oberfläche des Eisenbades in einem Bereich, in dem hauptsächlich metallische Spritzer auftreten. Der zweite Nachverbrennungsgasstrahl kommt dagegen weitgehend mit der Schlacke auf der Schmelze in Berührung, die kaum noch reduzierend auf das annähernd vollständig verbrannte Gas wirkt.

Weiterhin hat es sich als vorteilhaft herausgestellt, die Badtiefe in dem ersten Reaktionsraum, mit höherem Reduktionspotential, größer als im zweiten Reaktionsraum auszulegen. Besonders günstig ist es, wenn in dem zweiten Reaktionsraum praktisch kein Eisenbad mehr vorhanden ist, sondern nur noch flüssige Schlacke

Das aufgemahlene Erz kann erfindungsgemäß teilweise oder vollständig im zweiten Reaktionsraum zugegeben werden. In der flüssigen Phase, d.h. in der Schmeize, sollte zwischen den beiden Reaktionsräumen ein ausreichender Konzentrations- und Stoffaustausch erfolgen. Normalerweise reicht die kräftige Badbewegung im Reaktionsraum 1 dazu aus.

Die Energieträger, hauptsächlich die kohlenstoffenthaltenden Brennstoffe, führt man der Schmelze vorteilhafterweise im Bereich des ersten Nachverbrennungsreaktionsraumes zu, in dem die Reaktionsgase dann auch der ersten Nachverbrennung unterliegen. Demgegenüber erfolgt die Zugabe der oxidierten Stoffe, wie das zu reduzierende Erz, vorteilhafterweise im Reaktionsraum 2, in dem der zweite Nachverbrennungsgasstrahl wirkt.

Gemäß der Erfindung können die Nachverbrennungsgasstrahlen in ihren Reaktionsräumen unterschiedlich angeordnet werden. Zur Erzielung eines optimalen Nachverbrennungsgrades sind der Düsendurchmesser und die Laufstrecke des Gases von entscheidender Bedeutung. Beispielsweise kann man die Nachverbrennungsgasstrahlen senkrecht auf das Bad richten. Um jedoch eine längere Laufstrecke zu erreichen, ist eine schräge Anordnung zweckmäßig. Der Primär- und Sekundär-Nachverbrennungsgasstrahl kann parallel ausgerichtet sein, jedoch auch eine entgegengesetzte Neigung kann, bezogen auf die Einschmelzreaktorgeometrie, bessere Bedingungen für die Nachverbrennung ergeben.

Niedrige Verbrauchswerte an Energieträgern und damit eine hohe Wirtschaftlichkeit des Verfahrens, lassen sich erfindungsgemäß durch einen Nachverbrennungsgrad von 30 bis 50% im ersten Reaktionsraum und von 60 bis 100% in der zweiten Nachverbrennungsstufe erreichen. Neben den bereits genannten Maßnahmen hat sich zur Erzielung der hohen Nachverbrennungsraten die Anwendung von vorgewärmter Luft. d.h. Heißwind, als sauerstoffenthaltendes Gas bewährt. Überraschenderweise bewirkt die Verwendung von Heißwind als Sauerstoffträger bei dem erfindungsgemäßgen Verfahren keine unerwünschte Überhitzung im Gasraum des Einschmelzreaktors.

Es liegt weiterhin im Sinne der vorliegenden Erfindung, das Abgas bei dem oder nach dem Verlassen des Einschmelzreaktors, damit ist auch gas erwähnte kombinierte Reaktionsgefäß aus zwei Kammern gemeint, durch Zugabe von Reduktionsmitteln, wie z.B. pulverförmige Kohle oder Erdgas, abzukühlen und gleichzeitig zu reduzieren und somit den Heizwert deutlich anzuheben. Auch ein Teilstrom des Abgases kann in dieser Weise behandelt werden. Bei einer vorteilhaften Ausgestaltung der Erfindung nimmt man einen Teilstrom der Abgase aus dem Reaktionsraum 1 und reduziert ihn in der genannten Art, um mit diesem Gas die Luft für den Prozeß vorzuheizen.

Gemäß der Erfindung ist ein Queraustausch der Stoffe in der flüssigen Phase zwischen den beiden Reaktionsräumen vorteilhaft, denn damit ist beispielsweise auch ein Ausgleich der Energie zwischen den Reaktionsräumen verbunden. Allerdings ist bei der Durchführung des Verfahrens gemäß der Erfindung dieser Queraustausch in der flüssigen Phase nicht zwingend erforderlich. Das Verfahren läßt sich auch in der Weise betreiben, daß man in einem angekoppelten zweiten Reaktionsgefäß, das in seinem Flüssigkeitsbereich vom ersten System getrennt ist, das Eisenoxid aufschmilzt, wobei es sich thermisch zu Wüstit zersetzen kann, und dann diese Schmelze dem Reaktionsraum zuführt.

Falls man des Erz feinkörnig zusammen mit dem zweiten Nachverbrennungsgasstrahl einbläst, kann es zur Verbesserung der Wärmeausnutzung sinnvoll sein, das Erz so in den Nachverbrennungsgasstrahl einzuleiten, daß es gleichzeitig mit aufgeheizt wird. Um dies zu erreichen, haben sich eine Korngröße bis 0.3 mm und eine gute gleichmäßige Verteilung der gemahlenen Erze innerhalb des Nachverbrennungsgasstrahls bewährt. Auch kann man die Gleichverteilung des Feinerzes erreichen, wenn es mit möglichst niedriger Geschwindigkeit von ca. 50 bis 200 m/sek eingeblasen wird, um an der Einleitungsstelle eine Verwirbelung im Gasstrahl zu begünstigen.

Die Erfindung wird nun anhand von schematischen Darstellungen und nichteinschränkenden beispielhaften Angaben näher erläutert.

Figur 1 und Figur 2 zeigen Längsschnitte durch einen trommelförmigen Einschmelzreaktor mit unterschiedlicher Anordnung der Aufblasvorrichtungen.

Figur 3 zeigt den Längsschnitt durch einen Einschmelzreaktor mit einem angekoppelten zweiten Reaktionsgefäß.

Figur 4 zeigt den Längsschnitt durch einen trommelförmigen Einschmelzreaktor mit nachgeschalteter Kühlkammer für die Abgase und anschließendem Zyklon.

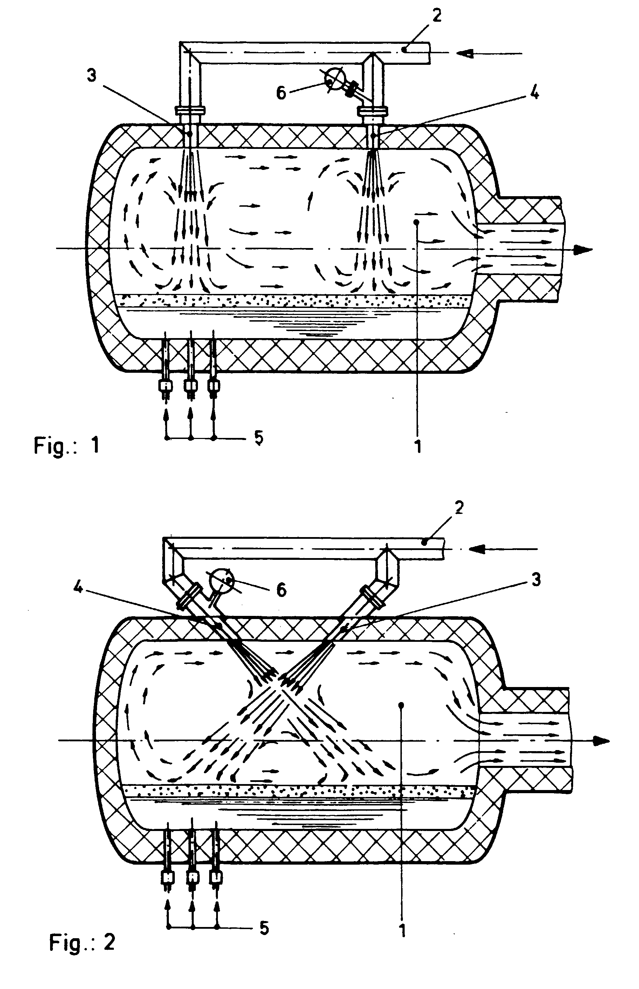

Der trommelförmige Einschmelzreaktor 1 ist um seine Symmetrieachse drehbar. Der Heißwind wird über Leitung 2 den beiden Windformen 3 und 4 zugeführt. Die nachverbrennungsgasstrahlen sind von oben auf die Badoberfläche gerichtet. Es entsteht ein erster Reaktionsraum unterhalb der Aufblasöffnung 3 und der zweite Reaktionsraum unterhalb der Aufblastöffnung 4. Die kohlenstoffenthaltenden Brennstoffe, hauptsächlich staubförmige Kohle, werden durch die Düsen 5 der Schmelze zugeführt. Andere Kohlezugabearten, beispielsweise durch Aufblasen, sind ebenfalls möglich. Das gemahlene Erz wird über die Zuführungsleitung 6 zusammen mit dem zweiten Nachverbrennungsgasstrahl über die Öffnung 4 eingeblasen. Die Gasströmung im Einschmelzreaktor 1 ist durch Pfeile dargestellt. Wie aus Figur 1 zu entnehmen, sind die beiden Reaktionsräume wirkungsmäßig unabhängig voneinander, d.h. in der Gasphase im wesentlichen getrennt, weil die Aufblasstrahlen eine hohe Stabilität zeigen.

Diese Stabilität der Nachverbrennungsgasstrahlen zusammen mit der Tatsache, daß im oberen Bereich. d.h. in unmittelbarer Nähe der Aufblasöffnung, noch keine großen Gasmengen angesaugt werden, läßt sich dazu nutzen, die beiden Nachverbrennungsgasstrahlen, wie in Figur 2 dargestellt, im oberen Bereich gegeneinander blasen zu lassen. Allerdings müssen die Düsen so angeordnet sein, daß die Gasstrahlen sich im Raum nicht kreuzen.

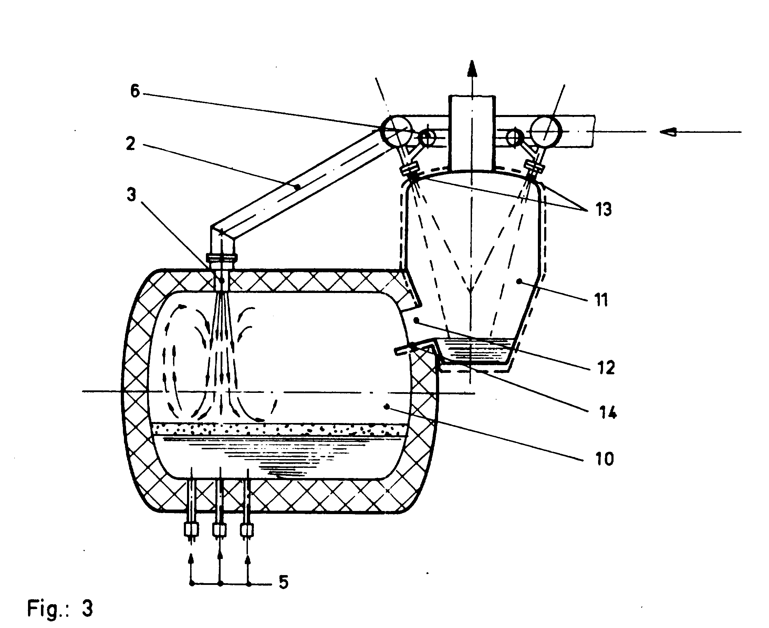

Eine Variante des erfindungsgemäßen Verfahrens mit Einschmelzreaktor 10, dem ersten Reaktionsraum und einem angekoppelten zweiten Reaktionsraum 11, ist in Figur 3 darstellt. In diesem Fall befindet sich auch die flüssige Phase in zwei getrennten Reaktionsräumen. Die Abgase aus dem ersten Reaktionsraum 10 gelangen über die Öffnung 12 in einen wassergekühlten zweiten Reaktionsraum 11. Im Reaktionsraum 11 werden die Abgase aus dem Einschmelzreaktor 10 durch die beiden Nachverbrennungsgasstrahlen aus den Düsen 13 verbrannt. Gleichzeitig wird das Erz, das den Düsen 13 durch die Zuführungsleitung 6 zugeleitet wird, aufgeschmolzen und thermisch zu FeO reduziert. Das geschmolzene Wüstit läuft über die wassergekühlte Rinne 14 in den ersten Reaktionsraum, d.h. den Einschmelzreaktor. Das flüssige Wüstit fließt also, ohne mit dem Feuerfest-Material in Kontakt zu kommen, der Schmelze im ersten Reaktionsraum zu.

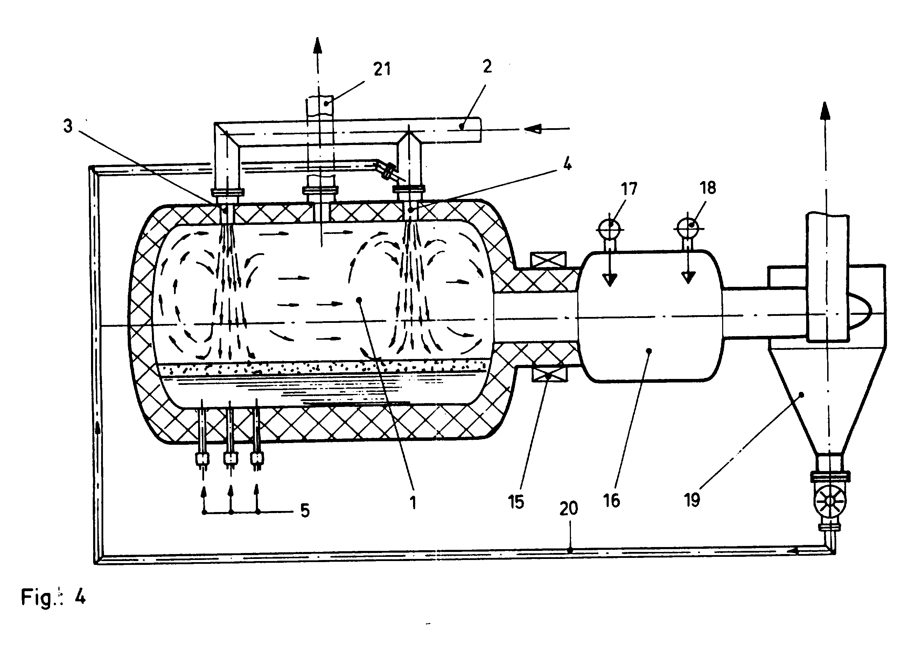

Die Figur 4 zeigt eine weitere Ausgestaltung der vorliegenden Erfindung. Die Abgase aus dem Einschmelzreaktor 1 durchströmen die Drehdurchführung 15 und werden in der direkt anschließenden Abkühlkammer 16 durch die Zugabe von Kalkstein über die Zuführung 17 und Feinerz über die Zuführung 18 abgekühlt. Dabei nehmen diese pulverförmigen Substanzen gleichzeitig die im Abgas enthaltenen Metalltröpfchen auf. In einer besonders vorteilhaften Ausführungsform der Erfindung führt man Kalkstein und Erz zur Abkühlung der Gase nacheinander zu. Dadurch wird die Entsäuerung des Kalksteins schnell bei hohen Temperaturen durchgeführt und das Erz anschließend aufgeheizt. Die pulverförmigen Stoffe scheidet man nach erfolgter Kühlung heiß in einem Zyklon 19 ab, und ggf. kann das Gas-Feststoff-Gemisch vorher nach weiter abgekühlt werden. Hierfür hat es sich bewährt, rezirkuliertes Abgas vor dem Zyklon 19 zuzugeben. Das Gemisch aus vorgewärmtem Erz (ca. 700°C) und Kalk fördert man dann aus dem Zyklon 19 über die Leitung 20 in den Nachverbrennungsstrahl der Aufblaseinrichtung 4. Aus dem Einschmelzreaktor läßt sich ein Teilstrom der Abgase über Leitung 21 direkt einem Abhitzekessel zuführen, und diesen Abgasanteil kann man beispielsweise für die Heißwinderzeugung nutzen.

In ein Einschmelzgefäß, ähnlich Figur 4, bläst man zur Erzeugung von 1 t Eisen über die Unterbaddüsen 5 550 kg iener Gasflammkohle mit ca. 33% flüchtigen Bestandteilen und einem Heizwert Hu von 7200 kcal/kg ein. Zur weiteren Unterstützung des Wärmeüberganges aus dem Nachverbrennungsstrahl im ersten Reaktionsraum können zusätzlich ca. 5% der Gesamterzmenge durch die Düsen 5 strömen. Über die Windform 3 werden 1800 m³ Heißwind mit einer Vorheiztemperatur von ca. 1200°C aufgeblasen. Im ersten Reaktionsraum läßt sich dann ein Nachverbrennungsgrad von 40% erreichen, d.h. das Abgas, das den Reaktionsraum 1 in Richtung des Gasaustrittes verläßt, hat im Mittel einen Oxidationsgrad von 40%. Im zweiten Reaktionsraum bläst man durch Windform 4 noch einmal 800 Nm³ Heißwind mit gleicher Temperatur auf und erreicht dadurch einen Nachverbrennungsgrad von insgesamt 80%. Zusammen mit diesem Nachverbrennungsgasstrahl im zweiten Reaktionsraum werden Erz und Kalk, beides auf ca. 700°C vorgeheizt, mit auf das Bad geblasen. Es entsteht ein Abgasvolumen von 2100 m³ mit einem fühlbaren Wärmeinhalt von 1.3 Gcal und einem chemischen, d.h. gebundenen, Wärmeinhalt von 0.4 Gcal. Dieses Abgas wird unmittelbar nach Passieren der Drehdurchführung 15 durch die Zugabe des Erzes und der gesamten Kalksteinmenge von etwa 300 kg/t Eisen, abgekühlt. Dabei stellt sich eine mittlere Temperatur von ca. 1200°C ein. Zur weiteren Abkühlung auf ca. 800°C führt man direkt vor dem Zyklon ca. 500 Nm³ rezirkuliertes Abgas zu.

Ein weiteres Beispiel zur Erläuterung der vorliegenden Erfindung betrifft eine besonders einfache Verfahrensvariante.

In einem langgestreckten, trommelförmigen Einschmelzreaktor mit den äußeren Abmessungen von ca. 10 m Länge und 6 m Durchmesser und einer 60 cm starken feuerfesten Zustellung werden pro Stunde ca 50 t flüssiges Eisen erzeugt. In der ersten Reaktionszone führt man dem Eisenbad vorzugsweise druch die Unterbaddüsen ca. 600 kg/t Eisen einer Gasflammkohle zu. Die gesamte, für die Verbrennung des Kohlenstoffs erforderliche, Sauerstoffmenge bläst man durch sechs Düsen als Freistrahl mit einer Lauflänge von ca. 5 m ungefähr gleichverteilt auf die Badoberfläche im Reaktionsraum 1 auf. Dabei hat es sich bewährt, zur Verbesserung des Nachverbrennungsgrades etwa 5% der gesamten Erzmenge unterhalb der Badoberfläche im Bereich des ersten Reaktionsraumes einzuleiten.

Das Abgas passiert auf seinem Weg zum Gasauslaß des Einschmelzreaktors den zweiten Reaktionsraum. In diesem Reaktionsraum 2 bläst man mit ähnlicher Aufblastechnik wie im Reaktionsraum 1, Heißwind auf das Bad. Der Heißwind wird mit feinkörnigem Erz beladen, das sich im Kontakt mit dem Haißwind aufheist. Durch die Erzzugabe und die aufgeblasene, vorgewärmte Luft stellt sich im Bereich der Badoberfläche in diesem zweiten Reaktionsraum ein deutlich erhöhter Eisenoxydgehalt in der Schlacke gegenüber dem Reaktionsraum 1 ein. Der erzielte Nachverbrennungsgrad im Reaktionsraum 2 beträgt ca. 80%, und von dieser Wärmemenge werden, ähnlich wie im Reaktionsraum 1, etwa 90% an das Bad übertragen. Es hat sich zur Verbesserung der Badbewegung und der damit verbundenen günstigen Beeinflussung der Wärmeübertragung aus dem Nachverbrennungsgasstrahl als zweckmäßig erwiesen, unterhalb der Badoberfläche im Bereich des Reaktionsraumes 2 inertgas mit oder ohne Kohlestaubbeladung einzuleiten.

## Patentansprüche

1. Verfahren zur Schmelzreduktion von Eisenerzen, bei dem das Eisenoxid im wesentlichen im flüssigen Zustand reduziert wird und die erforderliche Energie zum Ausgleich der Wärmebilanz des Prozesses durch die Zugabe kohlenstoffenthaltender Brennstoffe an die Schmelze und durch die Nachverbrennung der entstehenden Reaktionsgase, hauptsächlich CO und H₂, erzeugt wird, dadurch gekennzeichnet, daß die Reaktionsgase nacheinander zweimal oder häufiger in Gasstrahlen vorgewärmter Luft, die in Reaktionsräume blasen, die wirkungsmäßig unabhängig voneinander sind, nachverbrannt werden und daß die durch die zumindest zweistufige Nachverbrennung erzeugte Wärme an die Schmelze rückübertragen wird.

2. Verfahren nach Anspruch 1, dadurch gekennzeichnet, daß die Reaktionsräume der Gasstrahlen in Reaktionsgasströmungsrichtung hintereinander liegen, und daß das Reduktionspotential an der Auftreffstelle des zweiten oder weiterer Nachverbrennungsgasstrahlen geringer ist.

3. Verfahren nach den Ansprüchen 1 oder 2, dadurch gekennzeichnet, daß im Bereich mit dem hohen Reduktionspotential der Schmelze im Einschmelzreaktor eine starke Badbewegung aufrechterhalten wird.

4. Verfahren nach einem oder mehreren der Ansprüche 1 bis 3, dadurch gekennzeichnet, daß die zwei- oder mehrstufige Nachverbrennung in einem oder in zwei aneinander gekoppelten Gefäßen durchgeführt wird.

5. Verfahren nach einem oder mehreren der Ansprüche 1 bis 4, dadurch gekennzeichnet, daß gemahlenes Erz im zweiten oder in einem weiteren Reaktionsraum für die Nachverbrennung eingeleitet wird.

6. Verfahren nach einem oder mehreren der Ansprüche 1 bis 5, dadurch gekennzeichnet, daß zwischen den beiden ersten Reaktionsräumen für die Nachverbrennung ein Stoffaustausch in der flüssigen Phase erfolgt.

7. Verfahren nach einem oder mehreren der Ansprüche 1 bis 6, dadurch gekennzeichnet, daß die kohlenstoffenthaltenden Brennstoffe im ersten Reaktionsraum für die Nachverbrennung und somit im Bereich des höchsten Reaktionspotentiels in die Schmelze eingeleitet werden.

8. Verfahren nach einem oder mehreren der Ansprüche 1 bis 7, dadurch gekennzeichnet, daß die Gasstrahlen in ihren Reaktionsräumen schräg in bezug auf die Badoberfläche eingeblasen werden.

9. Verfahren nach einem oder mehreren der Ansprüche 1 bis 8, dadurch gekennzeichnet, daß in der ersten Nachverbrennungsstufe im Reaktionsraum mit dem hohen Reduktionspotential ein Nachverbrennungsgrad von 30 bis 50% und in der zweiten Nachverbrennungsstufe ein Nachverbrennungsgrad von 60 bis 100% eingestellt wird.

## Claims

1. A method for the melt reduction of iron ores wherein the iron oxide is reduced substantially in the liquid state and the energy required for the heat balance of the process is generated by adding carbonaceous fuels to the melt and by afterburning the resulting reaction gases, mainly CO and H2, characterized in that the reaction gases are afterburned successively two or more times in gas jets of preheated air that blow into reaction spaces which are effectively independent of each other, and the heat generated by the at least two-stage afterburning is retransferred to the melt.

2. The method of claim 1, characterized in that the reaction spaces of the gas jets are located one behind the other in the direction of flow of the reaction gas, and the reduction potential is smaller at the point of impact of the second or further afterburning gas jets.

3. The method of claims 1 or 2, characterized in that strong bath agitation is maintained in the area with the nigh reduction potential of the melt in the melt-down reactor.

4. The method of one or more of claims 1 to 3, characterized in that the two- or multi-stage afterburning is performed in one vessel or in two linked vessels.

5. The method of one or more of claims 1 to 4, characterized in that ground ore is introduced in the second or in a further reaction space for the afterburning.

6. The method of one or more of claims 1 to 5, characterized in that mass transfer takes place in the liquid phase between the two first reaction spaces for the afterburning.

7. The method of one or more of claims 1 to 6, characterized in that the carbonaceous fuels are introduced into the melt in the first reaction space for the afterburning and thus in the area of the highest reduction potential.

8. The method of one or more of claims 1 to 7, characterized in that the gas jets are blown in obliquely in their reaction spaces relative to the bath surface.

9. The method of one or more of claims 1 to 8, characterized in that an afterburning degree of 30 to 50% is set in the first afterburning stage in the reaction space with the high reduction potential, and an afterburning degree of 60 to 100% is set in the second afterburning stage.

## Revendications

1. Procédé de réduction par fusion de minerai de fer, dans lequel l'oxyde de fer est réduit essentiellement à l'état liquide et l'énergie nécessaire à l'équilibre du bilan thermique du processus est produite par addition à la masse en fusion de combustibles contenant du carbone et par recombustion des gaz de réaction obtenus, principalement du CO et du H₂, caractérisé en ce que les gaz de réaction sont soumis deux fois ou plus à la suite à une recombustion dans des jets gazeux d'air préchauffé soufflant dans des espaces de réaction qui sont fonctionnellement indépendants les uns des autres, et en ce que la chaleur produite par la recombustion en au moins deux étapes est retransmise à la masse en fusion.

2. Procédé selon la revendication 1, caractérisé en ce que les espaces de réaction des jets gazeux sont situés les uns derrière les autres dans la direction du flux des gaz de réaction et en ce que le potentiel de réduction est, au point d'impact du deuxième jet gazeux de postcombustion ou des suivants, inférieur à celui du premier.

3. Procédé selon les revendications 1 ou 2, caractérisé en ce que, dans le réacteur de fusion, une forte agitation du bain est maintenue dans la zone de fort potentiel de réduction de la masse fondue.

4. Procédé selon l'une ou plusieurs des revendications 1 à 3, caractérisé en ce que la postcombustion en deux ou plusieurs étapes se produit dans un ou deux récipients couplés l'un contre l'autre.

5. Procédé selon l'une ou plusieurs des revendications 1 à 4, caractérisé en ce que l'on envoie le minerai broyé dans le deuxième espace de réaction ou dans un autre espace de réaction prévu pour la postcombustion.

6. Procédé selon l'une ou plusieurs des revendications 1 à 5, caractérisé en ce qu'un échange de matières a lieu en phase liquide entre les deux premiers espaces de réaction prévus pour la postcombustion.

7. Procédé selon l'une ou plusieurs des revendications 1 à 6, caractérisé en ce que c'est dans le premier espace de réaction prévu pour la combustion, et donc dans la zone à plus fort potentiel de réduction, que l'on envoie dans la masse en fusion des combustibles contenant du carbone.

8. Procédé selon l'une ou plusieurs des revendications 1 à 7, caractérisé en ce que les jets gazeux sont soufflés dans leurs espaces de réaction obliquement par rapport à la surface du bain.

9. Procédé selon l'une ou plusieurs des revendications 1 à 8, caractérisé en ce que, au cours de la première étape de la postcombustion, un degré de postcombustion de 30 à 50 % est atteint dans l'espace de réaction à fort potentiel de réduction et de 60 à 100 % pendant la deuxième étape de la postcombustion.
